# EUROPÄISCHE PATENTSCHRIFT

(11) **EP 1 559 599 B1**
(45) Veröffentlichungstag und Bekanntmachung des Hinweises auf die Patenterteilung: **13.02.2008**
(21) Anmeldenummer: 04027509.1
(22) Anmeldetag: 19.11.2004
(51) Int. Cl.: B60J 5/04

(54) **Fahrzeugtür**
Vehicle door
Port pour véhicule

(30) Priorität: 29.01.2004 DE 102004004377
(43) Veröffentlichungstag der Anmeldung: 03.08.2005
(73) Patentinhaber: Dr.Ing. h.c. F. Porsche Aktiengesellschaft, 70435 Stuttgart (DE)
(72) Erfinder: Metzler, Jürgen, 76571 Gaggenau (DE); Hogenmüller, Jan, 71229 Leonberg (DE); Klamser, Herbert, 71120 Grafenau (DE); Morozini de Lira, Adriano, 71229 Leonberg (DE); Kusche, Jörg, 75248 Dürrn (DE)

(56) Entgegenhaltungen:
- EP-A- 0 989 007
- EP-A- 1 086 840
- EP-A- 1 405 746
- DE-A1- 4 008 111
- DE-A1- 10 048 124
- FR-A- 2 667 272

## Beschreibung

Die Erfindung bezieht sich auf eine Fahrzeugtür mit innenliegenden Verstärkungen nach dem Oberbegriff des Patentanspruchs 1.

Aus der DE 40 08 111 A1 ist eine Fahrzeugtür bekannt, die eine Tragstruktur umfasst, in welcher verstärkende Träger angeordnet sind, die mit dem Rahmen der Türtragstruktur verbunden sind. Aus der EP 1 086 840 A1 ist ein Türelement mit einem innenliegenden Verstärkungsträger bekannt, der aus einem oben liegenden Gurt, einem unten liegenden Gurt sowie einer Diagonalstrebe und Anbindungsstreben für die Tür besteht.

Die Aufgabe der Erfindung besteht darin, eine Fahrzeugtür zu schaffen, welche in einem Bereich der Tür-Schließeinrichtung steif ausgebildet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, eine Reduzierung des Schwingungsverhaltens des Türaußenbleches zu erzielen, so dass ein Bereich der Fahrzeugtür in gezielter Weise versteift wird und somit bei einem Crashfall die Tür nicht alleine aufspringen kann, d.h. der Schließmechanismus der Fahrzeugtür kann sich bei einem von außen auf die Tür auftreffenden Stoß nicht öffnen. Durch diesen äußeren Stoß versucht sich der obere Bereich der Tür, in welcher eine Schließfalle der Schließeinrichtung angeordnet ist, nach außen in Öffnungsrichtung der Tür zu bewegen. Außerdem soll durch die Verstärkung eine gezielte Kraftumlenkung im Crashfall erfolgen.

Um dieses zu vermeiden ist nach der Erfindung vorgesehen, dass die eine innenliegende Verstärkung der Fahrzeugtür aus einem winkelförmig aus zwei Armteilen gebildeten Verstärkungsträger besteht. Das eine Armteil des Verstärkungsträger ist in einer etwa horizontalen Ebene ausgerichtet und mit seinem freien Ende am hinteren Türrahmenteil und das weitere etwa in einer Schrägebene ausgerichtete Armteil ist mit seinem abgekehrten anderen freien Ende an einem Aufprallträger der Tür befestigt. Hierdurch wird in vorteilhafter Weise nach der Erfindung erreicht, dass der Bereich der Tür gezielt flächig versteift wird, in welcher die Fallenaufnahme der Schließeinrichtung angeordnet ist.

Um eine wirksame Verstärkung der Fahrzeugtür und eine gewisse Beulfestigkeit des Außenbleches der Tür zu erreichen, ist nach der Erfindung des Weiteren vorgesehen, dass der Verstärkungsträger im Querschnitt teilweise U-profilförmig ausgebildet ist und mit einer Stegfläche abschnittsweise am Türinnenblech über eine Klebung verbunden wird. Insbesondere ist der Verstärkungsträger mit seinem freien Ende des etwa horizontal ausgerichteten Armteils über eine Lasche mit dem hinteren Rahmenteil der Fahrzeugtür verbunden. Eine feste Verbindung mit dem Türrahmen wird erreicht, indem der Verstärkungsträger mit seinem freien Ende des etwa schräg ausgerichteten Armteils über eine weitere Lasche mit einem Schenkel des Aufprallträgers verbunden wird. Der winkelförmige Verstärkungsträger ist mit dem Aufprallträger und dem hinteren Rahmenteil verbunden und bildet einen beulsicheren Flächenbereich des Türaußenbleches.

Ein Ausführungsbeispiel der Erfindung ist in den Zeichnungen dargestellt und wird im folgenden näher beschrieben.

Es zeigen
- Fig. 1: eine Ansicht auf eine Innenseite einer Fahrzeugtür mit Verstärkungen,

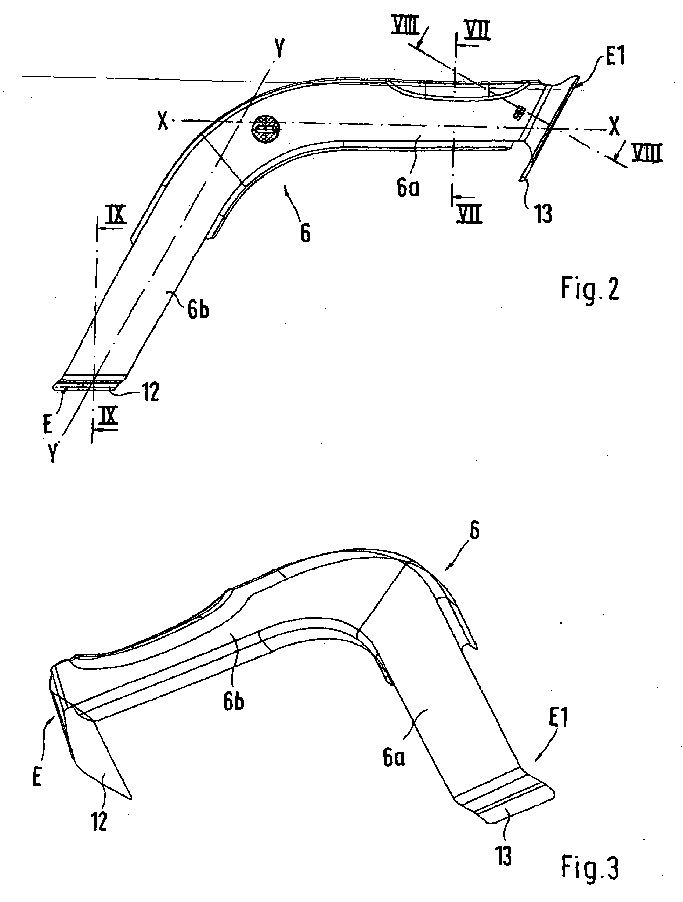

- Fig. 2: eine Ansicht auf eine winkelförmige Verstärkung,
- Fig. 3: eine schaubildliche Darstellung der winkelförmigen Verstärkung,
- Fig. 4: die beiden Verstärkungen in einer schaubildlichen Darstellung,
- Fig. 5: einen Schnitt durch die Fahrzeugtür nach der Linie V-V der Fig. 1,
- Fig. 6: einen Schnitt durch die Fahrzeugtür nach der Linie VI-VI der Fig. 1,
- Fig. 7: einen Schnitt durch die Fahrzeugtür nach der Linie VII-VII der Fig. 1,
- Fig. 8: einen Schnitt durch die Fahrzeugtür nach der Linie VIII-VIII der Fig. 1 und
- Fig. 9: einen Schnitt durch die Fahrzeugtür nach der Linie IX-IX der Fig. 1.

Eine hintere seitliche Fahrzeugtür 1 eines Kraftfahrzeuges umfasst unter anderem einen Türrahmen 2 mit einem vorderen und einem hinteren Rahmenteil 3, 4, mit denen ein etwa horizontal ausgerichteter Aufprallträger 5 verbunden ist. Zusätzlich zu diesem Aufprallträger 5 ist ein winkelförmig ausgeführter Verstärkungsträger 6 in der Tür angeordnet und mit dem Aufprallträger 5 und dem einen Rahmenteil 4 sowie mit dem Türaußenblech 7 verbunden.

Der winkelförmige Verstärkungsträger 6 umfasst zwei Armteile 6a und 6b, wobei das eine Armteil 6a etwa in einer horizontalen Ebene X-X und das weitere Armteil 6b unter einem stumpfen Winkel α zum ersten Armteil 6 in einer Schrägebene Y-Y angeordnet ist.

Die Anordnung des Verstärkungsträgers 6 ist räumlich so gewählt, dass ein Schließelement S für die Tür - welches im Rahmenteil 4a als Öffnung 10 für einen einzuführenden Schließbügel S1 angeordnet ist - umgrenzt wird.

Zur Erzielung eines steifen Verbundes in der Tür 1 sind die freien Enden E und E1 des Verstärkungsträgers 6 mit dem Aufprallträger 5 fest verbunden. Des Weiteren ist der Verstärkungsträger 6 über eine Klebung 11 oder dergleichen Verbindung mit dem Türaußenblech 7 fest verbunden und stützt sich an diesem ab.

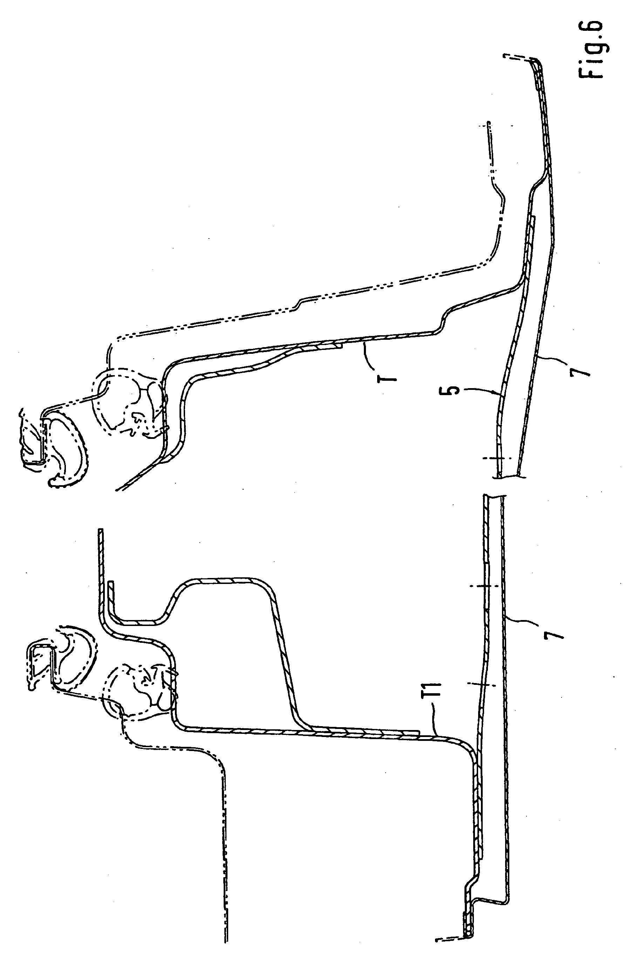

Der Aufprallträger 5 ist mit seinen freien Enden mit einem Türprofil T, T1 oder mit den Rahmenteilen 3, 4 des Türrahmens verbunden, was in Fig. 6 näher dargestellt ist. Mit diesem Aufprallträger 5 ist über Laschen 12, 13 der Verstärkungsträger 6 einerseits mit dem Aufprallträger 5 und andererseits mit dem Rahmenteil 4 verbunden.

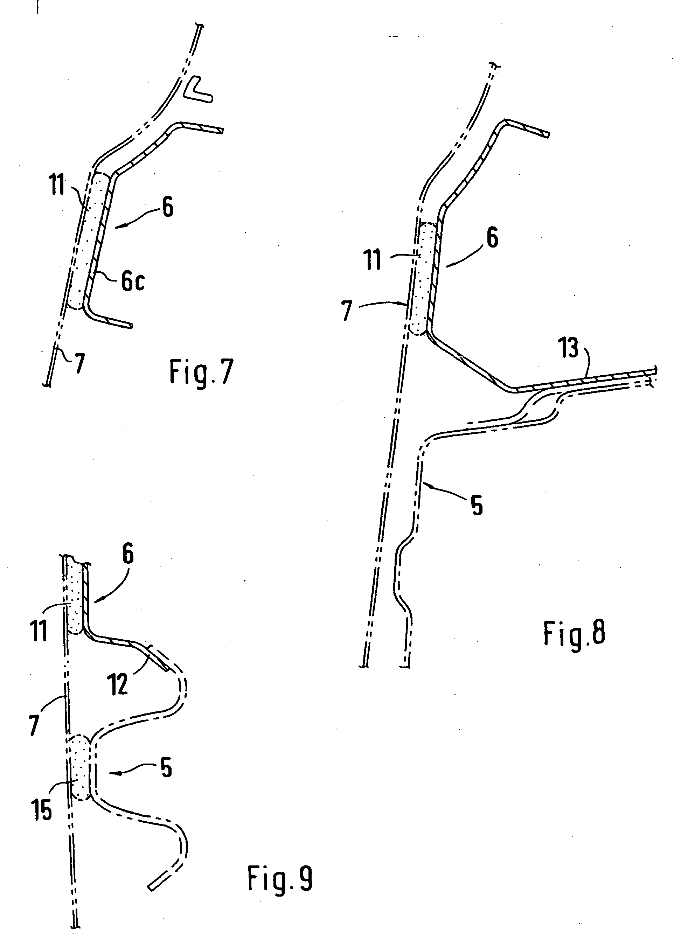

Wie in Fig. 7 näher dargestellt ist, wird der Verstärkungsträger 6 über die Klebung 11 mit dem Türaußenblech 7 fest verbunden. Des Weiteren ist in Fig. 8 die Verbindung des Verstärkungsträgers 6 mit dem Aufprallträger 5 über die Lasche 13 dargestellt. In Fig. 9 ist die Verbindung des Verstärkungsträgers 6 mit dem Aufprallträger 5 über die weitere Lasche 12 gezeigt.

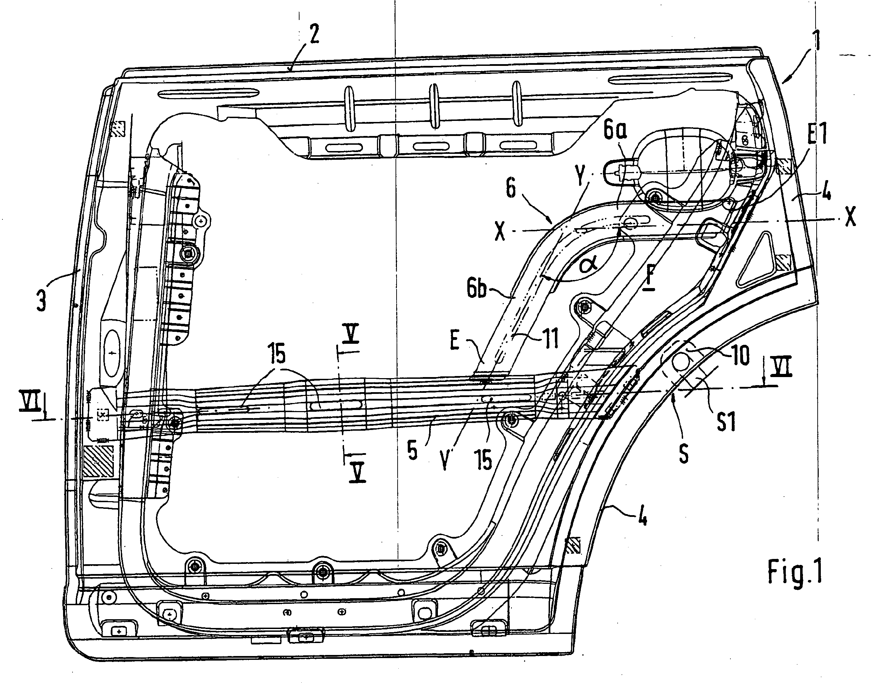

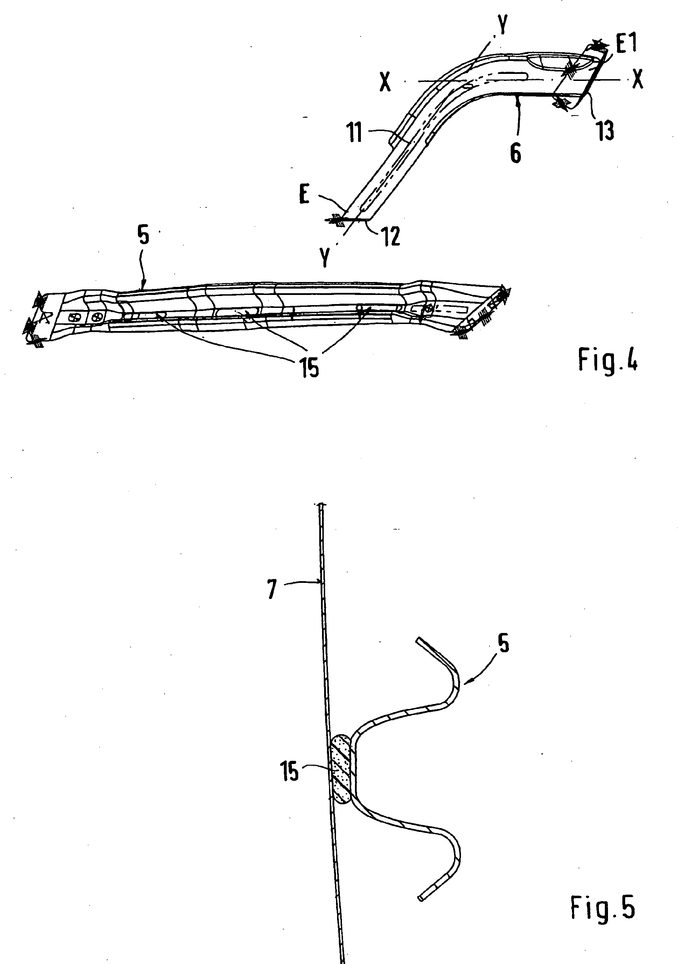

Der Verstärkungsträger 6 besteht im Querschnitt teilweise aus einem U-Profil und ist über seine Länge größtenteils mittels einer Klebung 11 mit dem Türaußenblech 7 fest verbunden, was in Fig. 4 näher dargestellt ist. Ebenfalls ist der Aufprallträger 5, wie in Fig. 1 und Fig. 9 gezeigt, über Klebungen 15 mit dem Türaußenblech 7 fest verbunden.

## Patentansprüche

1. Fahrzeugtür mit innenliegenden Verstärkungen, die zwischen einem hinteren und einem vorderen Rahmenteil einer Tragstruktur der Fahrzeugtür angeordnet wird und eine von den innenliegenden Verstärkungen aus einem Arme aufweisenden Verstärkungsträger besteht, **dadurch gekennzeichnet, dass** der Verstärkungsträger (6) winkelförmig aus zwei Armteilen gebildet ist, wobei das eine Armteil (6a) in einer etwa horizontalen Ebene (X-X) ausgerichtet ist und mit seinem freien Ende (E1) am hinteren Tür-Rahmenteil (4) und das weitere etwa in einer Schrägebene (Y-Y) ausgerichtete Armteil (6b) mit seinem abgekehrten anderen freien Ende (E) an einem Aufprallträger (5) der Tür (1) befestigt ist, der mit dem hinteren und vorderen Rahmenteil (3, 4) fest verbunden wird und zwischen dem Aufprallträger (5) und den Armteilen (6a, 6b) des Verstärkungsträgers (6) ein Schließelement (S, S1) der Fahrzeugtür (1) im hinteren Tür-Rahmenteil (4) angeordnet ist.

2. Fahrzeugtür nach Anspruch 1, **dadurch gekennzeichnet, dass** der Verstärkungsträger (6) im Querschnitt teilweise U-profilförmig ausgebildet ist und mit einer Stegfläche (6c) abschnittsweise am Türinnenblech (7) über eine Klebung (11) verbindbar ist.

3. Fahrzeugtür nach den Ansprüchen 1 oder 2, **dadurch gekennzeichnet, dass** der Verstärkungsträger (6) mit seinem einen freien Ende (E1) des etwa horizontal ausgerichteten Armteils (6a) über eine Lasche (13) mit dem hinteren Rahmenteil (4) der Fahrzeugtür (1) verbunden ist.

4. Fahrzeugtür nach den Ansprüchen 1, 2 oder 3, **dadurch gekennzeichnet, dass** der Verstärkungsträger (6) mit seinem anderen freien Ende (E1) des schräg ausgerichteten Armteils (6b) über eine weitere Lasche (12) mit einem Schenkel des Aufprallträgers (5) verbindbar ist.

5. Fahrzeugtür nach einem der vorhergehenden Ansprüche, **dadurch gekennzeichnet, dass** der winkelförmige Verstärkungsträger (6) mit dem Aufprallträger (5) und dem hinteren Rahmenteil (4) der Fahrzeugtür einen beulsicheren Flächenbereich (F) der Fahrzeugtür (1) bildet.

## Claims

1. A vehicle door with reinforcements situated on the inside, which are arranged between a rear and a front frame part of a support structure of the vehicle door, and one of the reinforcements situated on the inside consists of a reinforcement support comprising arms, **characterized in that** the reinforcement support (6) is formed in an angled manner from two arm parts, wherein one arm part (6a) is orientated in a substantially horizontal plane (**X-X**) and with its free end (**E1**) on the rear door-frame part (4), and the other arm part (6b) orientated substantially in an oblique plane (**Y-Y**) is fastened, with its other free end (**E**) facing away, to an impact support (5) of the door (1), which impact support (5) is connected to the rear and front frame part (3, 4) in a fixed manner, and a closure element (**S, S1**) of the vehicle door (1) is arranged in the rear door-frame part (4) between the impact support (5) and the arm parts (6a, 6b) of the reinforcement support (6).

2. A vehicle door according to Claim 1, **characterized in that** the reinforcement support (6) is made with a partially U-shaped profile in cross-section and is capable of being joined by a web face (6c) locally to the inner panel (7) of the door by way of an adhesive join (11).

3. A vehicle door according to Claim 1 or 2, **characterized in that** the reinforcement support (6) is connected by one of its free ends (**E1**) of the arm part (6a) orientated substantially horizontally to the rear frame part (4) of the vehicle door (1) by way of a fastening plate (13).

4. A vehicle door according to Claim 1, 2 or 3, **characterized in that** the reinforcement support (6) is capable of being connected by its other free end (**E1**) of the obliquely orientated arm part (6b) to a limb of the impact support (5) by way of a further fastening plate (12).

5. A vehicle door according to any one of the preceding Claims, **characterized in that** the angled reinforcement support (6) forms, together with the impact support (5) and the rear frame part (4) of the vehicle door, a buckle-proof surface region (**F**) of the vehicle door (1).

## Revendications

1. Porte de véhicule avec des renforcements intérieurs, qui sont disposés entre une partie avant et une partie arrière de châssis d'une structure portante, et dont l'un des renforcements intérieurs est constitué d'un support de renforcement présentant un bras, **caractérisée en ce que** le support de renforcement (6) comporte deux parties de bras de forme angulaire, l'une des parties de bras (6a) étant orientée dans un plan sensiblement horizontal (X-X) et fixée par son extrémité libre (E1) à la partie arrière du châssis de la porte (4), et l'autre partie du bras (6b) orientée sensiblement dans un plan oblique (Y-Y) étant fixée par son autre extrémité libre (E) opposée, à un support antichoc (5) de la porte (1) qui est relié fixement à la partie arrière et à la partie avant du châssis (3, 4), et entre le support antichoc (5) et les parties de bras (6a) et (6b) du support de renforcement (6) étant disposé un élément de fermeture (S, S1) de la porte du véhicule (1) dans la partie arrière du châssis de la porte (4).

2. Porte de véhicule selon la revendication 1, **caractérisée en ce que** le support de renforcement (6) est partiellement conformé dans sa section en profilé en U et peut être raccordé sectoriellement par une surface de son dos (6c) à la tôle extérieure de la porte (7) au moyen d'un collage (11).

3. Porte de véhicule selon l'une quelconque des revendications 1 ou 2, **caractérisée en ce que** le support de renforcement (6) est raccordé à l'aide d'une patte (13) par son unique extrémité libre (E1) de la partie de bras (6a) orientée dans un plan sensiblement horizontal, à la partie arrière de châssis (4) de la porte de véhicule (1).

4. Porte de véhicule selon l'une quelconque des revendications 1, 2 ou 3, **caractérisée en ce que** le support de renforcement (6) peut être relié à l'aide d'une autre patte (12), par son autre extrémité libre (E1) de la partie de bras (6b) orientée obliquement, à une branche du support antichoc (5).

5. Porte de véhicule selon l'une quelconque des précédentes revendications, **caractérisée en ce que** le support de renforcement (6) de forme angulaire forme avec le support antichoc (5) et la partie arrière de châssis (4), une zone superficielle (F) antichoc de la porte du véhicule (1).
